(19) Europäisches Patentamt
European Patent Office
Office européen des brevets

(11) **EP 4 656 040 A1**

(12) **EUROPEAN PATENT APPLICATION**
published in accordance with Art. 153(4) EPC

(43) Date of publication:
**03.12.2025  Bulletin 2025/49**

(21) Application number: **24770812.6**

(22) Date of filing: **08.03.2024**

(51) International Patent Classification (IPC):
*A01K 1/015* (2006.01)

(52) Cooperative Patent Classification (CPC):
**A01K 1/015**

(86) International application number:
**PCT/JP2024/009189**

(87) International publication number:
**WO 2024/190706 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.03.2023  JP 2023037840**

(71) Applicant: **Unicharm Corporation
Shikokuchuo-shi, Ehime 799-0111 (JP)**

(72) Inventors:
• **AKINO, Yasuhiro
Kanonji-shi, Kagawa 769-1602 (JP)**
• **YAMAMOTO, Hiroki
Kanonji-shi, Kagawa 769-1602 (JP)**

(74) Representative: **Dolleymores
9 Rickmansworth Road
Watford, Hertfordshire WD18 0JU (GB)**

(54) **LITTER FOR ANIMALS**

(57)  The present invention provides a litter for animals capable of sufficiently inhibiting occurrence of bad odor. A litter (3) for animals according to the present invention comprises a plurality of granular objects. Each of the plurality of granular objects contains an inorganic porous material and a solidifying agent, and further contains silica gel in a content amount of 0.0-2.5 mass%. In addition, the litter (3) for animals according to the present invention is characterized in that: the area of water droplet marks on each of the plurality of granular objects after a colored water drop test is less than 12.6 mm$^2$; the pH of ion exchanged water from the plurality of granular objects after a liquid passage test is lower than 7.62; or the litter has water repellency and an uneven structure having a plurality of projecting portions.

Fig. 1

EP 4 656 040 A1

**Description**

FIELD

The present invention relates to an animal litter used as a litter material in litter boxes for animals such as cats and dogs.

BACKGROUND

Conventionally, litter boxes for animals such as cats and dogs that are kept indoors, comprising a box-shaped litter box container with an open upper portion; and litter consisting of a plurality of granules contained in the litter box container, have been known. Further, as one type of litter boxes for animals, system litter boxes for animals comprising an upper container having a liquid-permeable bottom surface; and a lower container that is disposed below the upper container and contains a liquid-absorbent member have been known. The upper container of such a system litter box for animals contains litter, and urine of an animal passes between granules of the litter contained in the upper container to be absorbed by the liquid-absorbent member in the lower container.

The litter contained in the upper container of the system litter box for animals has a predetermined liquid permeability that allows the urine of an animal to move quickly to the lower container. Simultaneously, the litter has a predetermined absorbency that allows urine remaining on the surface of each granule to be absorbed to suppress generation of malodor due to urine remaining on the surface of each granule.

Therefore, the litter used in the system litter box for animals is required to have both liquid permeability and liquid absorbency. From such a viewpoint, a variety of litter have been proposed. For example, PTL 1 proposes an animal litter comprising a plurality of granules, wherein each of the plurality of granules comprises a particle group consisting of an inorganic porous material, silica gel, and an inorganic binder that integrally binds the particle group and the silica gel.

[CITATION LIST]

[PATENT LITERATURE]

[PTL 1] Japanese Unexamined Patent Publication (Kokai) No. 2009-125000

SUMMARY

[TECHNICAL PROBLEM]

Conventional animal litter using an inorganic porous material as the main raw material uses a solidifying agent such as cement as a binder. However, solidifying agents such as cement generate calcium hydroxide by a hardening reaction, and thus the pH is high. As a result, when animal litter is brought into contact with urine, decomposition of urea contained in the urine is accelerated, and there is a risk of generating ammonia, which causes malodor. Therefore, in an animal litter such as that of PTL 1, silica gel is mixed into each granule to suppress an increase in pH for each granule.

However, even in an animal litter such as that of PTL 1, silica gel may adsorb an odorous substance from the surrounding environment before the animal litter is used, and there is a risk that an unpleasant odor is generated by the adsorbed odorous substance being gradually released. In addition to odorous substances that can be present within the space of a rearing environment, odorous substances that can be present in the spaces of the manufacturing environments of the silica gel and animal litter are considered as odorous substances. Further, even after the silica gel adsorbs an odorous substance generated from excrement such as urine, there is a risk that an unpleasant odor is generated by the adsorbed odorous substance being gradually released.

In addition to malodor caused by an odorous substance adsorbed onto such silica gel, conventional animal litter may still generate malodors due to various causes, and further improvements relating to malodor suppression are required.

The present invention has been made in view of the above issues, and aims to provide an animal litter that can sufficiently suppress generation of malodor.

[SOLUTION TO PROBLEM]

The present invention includes the following aspects.

(Aspect 1)

An animal litter comprising a plurality of granules, wherein each of the plurality of granules comprises an inorganic porous material and a solidifying agent, and further comprises silica gel at a content of 0.0% by mass or greater and 2.5% by mass or less, and wherein an area of a water drop mark after a colored water drop test is less than 12.6 mm$^2$.

The animal litter of the present Aspect 1 comprises no silica gel at all or, even if the animal litter does comprise silica gel, comprises at a low content of 2.5% by mass or less. Since there is no odorous substance adsorbed onto silica gel or the amount of odorous substance adsorbed onto the silica gel is small, the release amount of odorous substance adsorbed onto the silica gel can consequently be reduced. As a result, the animal litter of the present Aspect 1 can suppress generation of malodor caused by the release of an odorous substance adsorbed onto silica gel.

In conventional animal litter, after a plurality of granules adsorb an odorous substance generated from excrement such as urine, there is a risk that an unpleasant odor is generated by the adsorbed odorous substance being gradually released. Further, in conventional animal litter, there is also a risk that an unpleasant odor of ammonia is generated, produced by evaporation of urine remaining on the surface of each granule. In the animal litter of the present Aspect 1, the area of a water drop mark after a colored water drop test is less than 12.6 mm$^2$, and the absorption area of each granule is small. Thus, urine easily passes between granules without being absorbed by each granule. As a result, in the animal litter of the present Aspect 1, urine does not easily remain on the surface of each granule, and ammonia produced by decomposition of urea contained in urine is not easily generated.

As described above, the animal litter of the present Aspect 1 can suppress generation of malodor caused by an odorous substance adsorbed onto silica gel and each granule, malodor caused by urine remaining on the surface of each granule, and malodor caused by ammonia, and can demonstrate an excellent malodor suppression effect.

(Aspect 2)

An animal litter comprising a plurality of granules, wherein each of the plurality of granules comprises an inorganic porous material and a solidifying agent, and further comprises silica gel at a content of 0.0% by mass or greater and 2.5% by mass or less, and wherein a pH of ion-exchange water after a liquid passage test for the plurality of granules is 7.62 or less.

The animal litter of the present Aspect 2 also comprises no silica gel at all or, even if the animal litter does comprise silica gel, comprises at a low content of 2.5% by mass or less. Since there is no odorous substance adsorbed onto silica gel or the amount of odorous substance adsorbed onto the silica gel is small, the release amount of odorous substance adsorbed onto the silica gel can consequently be reduced. As a result, the animal litter of the present Aspect 2 can also suppress generation of malodor caused by the release of an odorous substance adsorbed onto silica gel.

In conventional animal litter, even when silica gel is contained, the pH for a plurality of granules sometimes cannot be controlled within an appropriate range, and there is a risk that ammonia, which causes malodor, is generated. In the animal litter of the present Aspect 2, the pH of ion-exchange water after a liquid passage test for a plurality of granules is 7.62 or less, and therefore, even when the animal litter is brought into contact with urine, ammonia, which causes malodor, is not easily generated. As a result, the animal litter of the present Aspect 2 can suppress generation of malodor caused by ammonia.

As described above, the animal litter of the present Aspect 2 can suppress generation of malodor caused by an odorous substance adsorbed onto silica gel and malodor caused by ammonia, and can demonstrate an excellent malodor suppression effect.

(Aspect 3)

An animal litter comprising a plurality of granules,

wherein each of the plurality of granules comprises an inorganic porous material and a solidifying agent, and has water repellency, and
wherein each of the plurality of granules further comprises silica gel at a content of 0.0% by mass or greater and 2.5% by mass or less, and has an uneven structure comprising a plurality of convex portions.

The animal litter of the present Aspect 3 also comprises no silica gel at all or, even if the animal litter does comprise silica gel, comprises at a low content of 2.5% by mass or less. Since there is no odorous substance adsorbed onto silica gel or the amount of odorous substance adsorbed onto the silica gel is small, the release amount of odorous substance adsorbed onto the silica gel can consequently be reduced. As a result, the animal litter of the present Aspect 3 can also suppress generation of malodor caused by the release of an odorous substance adsorbed onto silica gel.

In conventional animal litter, after a plurality of granules adsorb an odorous substance generated from excrement such as urine, there is a risk that an unpleasant odor is generated by the adsorbed odorous substance being gradually released. Further, in conventional animal litter, there is also a risk that an unpleasant odor of ammonia is generated, produced by evaporation of urine remaining on the surface of each granule. In the animal litter of the present Aspect 3, since each of the plurality of granules has water repellency and an uneven structure, urine passes between granules without being absorbed by each granule even more easily, compared to those having water repellency and no uneven structure. As a result, in the animal litter of the present Aspect 3, urine does not easily remain on the surface of each granule, and ammonia produced by decomposition of urea contained in urine is not easily generated.

As described above, the animal litter of the present Aspect 3 can suppress generation of malodor caused by an odorous substance adsorbed onto silica gel and each granule, malodor caused by urine remaining on the surface of each granule, and malodor caused by ammonia, and can demonstrate an excellent malodor suppression effect.

(Aspect 4)

The animal litter according to any of Aspects 1 to 3, wherein each of the plurality of granules has a surface coated with a water-repelling agent.

In the animal litter of the present Aspect 4, since the surface of each granule is coated with a water-repelling agent, urine easily passes between granules without being absorbed by each granule, and therefore urine is less likely to come into contact with the inside of each granule, and ammonia produced by decomposition of urea in urine is not easily generated.

According to the above, the animal litter of the present Aspect 4 can more reliably suppress generation of malodor caused by an odorous substance adsorbed onto each granule, malodor caused by urine remaining on the surface of each granule, and malodor caused by ammonia, and can demonstrate an even more excellent malodor suppression effect.

(Aspect 5)

The animal litter according to any of Aspects 1 to 3, wherein each of the plurality of granules has a surface coated with an ethylene-vinyl acetate copolymer.

In the animal litter of the present Aspect 5, since the surface of each granule is coated with an ethylene-vinyl acetate copolymer (EVA), urine is less likely to come into contact with the inside of each granule, and ammonia produced by decomposition of urea in urine is not easily generated.

According to the above, the animal litter of the present Aspect 5 can more reliably suppress generation of malodor caused by ammonia and malodor caused by urine remaining on the surface of each granule, and can demonstrate an even more excellent malodor suppression effect.

(Aspect 6)

The animal litter according to any of Aspects 1 to 3, wherein each of the plurality of granules has a surface coated with a mixture of a water-repelling agent and an ethylene-vinyl acetate copolymer.

In the animal litter of the present Aspect 6, since the surface of each granule is coated with a mixture of a water-repelling agent and EVA, urine easily passes between granules without being absorbed by the plurality of granules, and therefore urine is less likely to come into contact with the inside of each granule, and ammonia produced by decomposition of urea in urine is not easily generated.

According to the above, the animal litter of the present Aspect 6 can better suppress generation of malodor caused by an odorous substance adsorbed onto each granule, malodor caused by urine remaining on the surface of each granule, and malodor caused by ammonia, and can demonstrate a more excellent malodor suppression effect.

(Aspect 7)

The animal litter according to any of Aspects 1 to 6, wherein each of the plurality of granules comprises a water-repellent particle at least on a surface of each of the plurality of granules.

In the animal litter of the present Aspect 7, since each granule comprises a water-repellent particle at least on the surface thereof, urine easily passes between granules without being absorbed by each granule, and therefore urine is less likely to come into contact with the inside of each granule, and ammonia produced by decomposition of urea in urine is not easily generated.

According to the above, the animal litter of the present Aspect 7 can more reliably suppress generation of malodor caused by an odorous substance adsorbed onto each granule, malodor caused by urine remaining on the surface of each granule, and malodor caused by ammonia, and can demonstrate an even more excellent malodor suppression effect.

(Aspect 8)

The animal litter according to any of Aspects 1 to 7, wherein each of the plurality of granules has an Ra (Arithmetic Mean Roughness) of 0.26 $\mu$m or more and 0.95 $\mu$m or less.

In the animal litter of the present Aspect 8, since each granule has an Ra (Arithmetic Mean Roughness) of a predetermined range, urine easily passes between granules without being absorbed by each granule, and therefore urine is less likely to come into contact with the inside of each granule, and ammonia produced by decomposition of urea in urine is not easily generated.

According to the above, the animal litter of the present Aspect 8 can more reliably suppress generation of malodor caused by an odorous substance adsorbed onto each granule, malodor caused by urine remaining on the surface of each granule, and malodor caused by ammonia, and can demonstrate an even more excellent malodor suppression effect.

(Aspect 9)

The animal litter according to any of Aspects 1 to 8, wherein each of the plurality of granules has an Rsm (Mean Width of Profile Elements) of 20 $\mu$m or more and 25 $\mu$m or less.

In the animal litter of the present Aspect 9, since each granule has an Rsm (Mean Width of Profile Elements) of a predetermined range, urine easily passes between granules without being absorbed by each granule, and therefore urine is less likely to come into contact with the inside of each granule, and ammonia produced by decomposition of urea in urine is not easily generated.

According to the above, the animal litter of the present Aspect 9 can more reliably suppress generation of malodor caused by an odorous substance adsorbed onto each granule, malodor caused by urine remaining on the surface of each granule, and malodor caused by ammonia, and can demonstrate an even more excellent malodor suppression effect.

(Aspect 10)

The animal litter according to Aspect 3, wherein the uneven structure comprises a particle that constitutes the animal litter.

In the animal litter of the present Aspect 10, since the uneven structure of each granule comprises granule-constituting particles that are resistant to plastic deformation, there is little deformation of the uneven structure even during use of the animal litter, urine easily passes between granules without being absorbed by each granule, and therefore urine is less likely to come into contact with the inside of each granule, and the effect of ammonia produced by decomposition of urea in urine not being easily generated can be maintained.

According to the above, the animal litter of the present Aspect 10 can more reliably suppress generation of malodor caused by an odorous substance being adsorbed onto each granule, malodor caused by urine remaining on the surface of each granule, and malodor caused by ammonia, and can demonstrate an even more excellent malodor suppression effect.

[ADVANTAGEOUS EFFECTS OF INVENTION]

According to the present invention, an animal litter that can sufficiently suppress generation of malodor can be provided.

BRIEF DESCRIPTION OF DRAWINGS

FIG. 1 is an oblique view that schematically shows a configuration of a system litter box 1 in which an animal litter 3 that is the first embodiment of the present invention is used.

FIG. 2 is an SEM image of the surface of a granule constituting the animal litter 3 that is the first embodiment of the present invention, which has been surface-treated with a water-repelling agent.

FIG. 3 is an SEM image of the surface of a granule constituting the animal litter 3 that is the first embodiment of the present invention, which has been surface-treated with an ethylene-vinyl acetate copolymer.

FIG. 4 is an SEM image of the surface of a granule constituting the animal litter 3 that is the first embodiment of the present invention, which has been surface-treated with a mixture of a water-repelling agent and an ethylene-vinyl acetate copolymer.

FIG. 5 is an SEM image of the surface of a granule constituting the animal litter 3 that is the first embodiment of the present invention, which has not been surface-treated.

DESCRIPTION OF EMBODIMENTS

Hereinafter, preferred embodiments of the animal litter according to one embodiment of the present invention will be described in detail with reference to the drawings. Note that various numerical ranges in the present specification refer to ranges that include the upper and lower limit values thereof, unless specified otherwise.

The present inventors, in order to achieve the above object, have carried out intensive studies focusing on causes of malodor generation, and as a result, have discovered that generation of a plurality of malodors with different causes of generation can be suppressed by the following various techniques. Specifically, the present inventors have discovered that the generation of a plurality of malodors with different causes of generation can be suppressed by at least one of the techniques of: reducing the silica gel content in each granule constituting an animal litter and decreasing the absorption area of each granule; and reducing the silica gel content in each granule constituting an animal litter and controlling the pH after liquid passage for a plurality of granules within an appropriate range.

The present invention has been completed based on such findings, and includes the following embodiments.

<First embodiment>

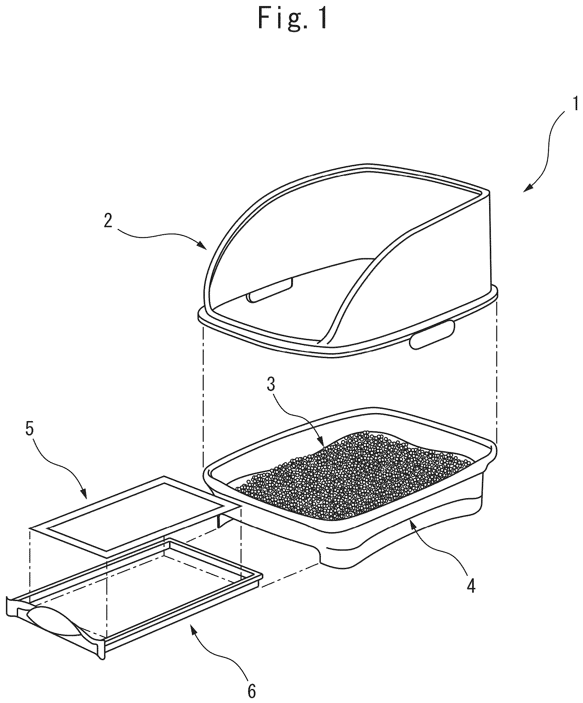

The animal litter 3 of the first embodiment, which is one embodiment of the present invention, will be described in detail with reference to FIG. 1.

FIG. 1 is an oblique view that schematically shows a configuration of a system litter box 1 in which an animal litter 3 that is the first embodiment of the present invention is used. As shown in FIG. 1, the system litter box 1 comprises a cover 2; the animal litter 3 of the first embodiment of the present invention; a litter storage container 4; a disposable excrement disposal sheet 5; and an excrement disposal sheet storage container 6.

The cover 2 is a member that limits the entry and exit points for an animal such as a cat, and forms an outer wall that serves as an enclosure for preventing scattering of excrement and the animal litter 3. The litter storage container 4 is a container for storing the animal litter 3, and is a container comprising a bottom portion (for example, a grating) having a structure (for example, a porous structure or a mesh structure) through which urine excreted from the animal can pass. The excrement disposal sheet 5 is a disposable liquid-absorbent sheet, placed below the bottom portion of the litter storage container 4, for absorbing and retaining urine that has passed through the animal litter 3 and the bottom portion. The excrement disposal sheet storage container 6 is a container for storing the excrement disposal sheet 5, and is a container that is installed below the litter storage container 4 to be freely removed and inserted.

The system litter box 1 shown in FIG. 1 is configured so that when an animal excretes urine inside the cover 2, the urine passes through the animal litter 3 and is absorbed and retained by the excrement disposal sheet 5 located below the animal litter 3. When urine passes through the animal litter 3, the urine is absorbed little by little by a plurality of granules constituting the animal litter 3, while passing between the granules and flowing downward.

The system litter box 1 is configured so that the spread of malodor caused by urine can be suppressed, by absorbing and retaining the urine inside the animal litter 3 and excrement disposal sheet 5, and by the animal litter 3 covering from above the inside space of the excrement disposal sheet storage container 6 containing the excrement disposal sheet 5. Therefore, in the system litter box 1, the animal litter 3 has predetermined liquid permeability and liquid absorbency, and has a predetermined adsorption property that allows an odorous substance generated from excrement to be adsorbed.

The animal litter 3 of the present embodiment is an animal litter comprising a plurality of granules, wherein each of the plurality of granules comprises an inorganic porous material and a solidifying agent. In the present embodiment, each of the plurality of granules further comprises silica gel at a content of 0.0% by mass or greater and 2.5% by mass or less, and the area of a water drop mark after a colored water drop test for each of the plurality of granules is less than 12.6 mm$^2$.

In the present specification, "further comprises silica gel at a content of 0.0% by mass or greater and 2.5% by mass or less" means comprising no silica gel at all or, even if comprising silica gel, comprising at a content of 2.5% by mass or less.

The animal litter 3 of the present embodiment comprises no silica gel at all or, even if the animal litter does comprise silica gel, comprises at a low content of 2.5% by mass or less. Since there is no odorous substance adsorbed onto silica gel or the amount of odorous substance adsorbed onto the silica gel is small, the release amount of odorous substance adsorbed onto the silica gel can consequently be reduced. As a result, the animal litter 3 of the present embodiment can suppress generation of malodor caused by the release of an odorous substance adsorbed onto silica gel.

As stated above, in conventional animal litter, after a granule adsorbs an odorous substance generated from excrement such as urine, there is a risk that an unpleasant odor is generated by the adsorbed odorous substance being gradually released. Further, in conventional animal litter, there is also a risk that an unpleasant odor of ammonia is generated, produced by evaporation of urine remaining on the surface of each granule. In the animal litter 3 of the present embodiment, the area of a water drop mark after a colored water drop test is less than 12.6 mm$^2$, and the absorption area of each granule is small. Thus, urine easily passes between granules without being absorbed by each granule. As a result, in the animal litter 3 of the present embodiment, ammonia produced by decomposition of urea contained in urine is not easily generated.

As described above, the animal litter 3 of the present embodiment can suppress generation of malodor caused by an odorous substance adsorbed onto silica gel and each granule, malodor caused by urine remaining on the surface of each granule, and malodor caused by ammonia, and can demonstrate an excellent malodor suppression effect.

In the present embodiment, the means of setting the area of a water drop mark after a colored water drop test on each granule to less than 12.6 mm$^2$ is not particularly limited, and any known means of adjusting water absorbency in the pertinent field can be adopted. Specific examples include adjusting the composition of components constituting each granule; and/or coating the surface of each granule with a surface treatment agent such as a water-repelling agent and adjusting the amount and the coating form thereof.

(Measurement method of area of water drop mark after colored water drop test)

The area of a water drop mark after a colored water drop test can be measured as follows.

(1) First, using a micropipette, 5 μL of water colored in blue is measured and dropped onto a granule sample to be measured.
(2) Next, using filter paper manufactured by ADVANTEC, any water drop on the granule is blotted.
(3) The size of water drop mark remaining on the surface of the granule is measured. At this time, the water drop mark is regarded as an ellipse, and the lengths of sections corresponding to the major axis (mm) and the minor axis (mm) thereof are each measured.
(4) The area (mm$^2$) of the water drop mark is calculated according to the following formula.

$$\text{Area of water drop mark} = (\text{major axis} / 2) \times (\text{minor axis} / 2) \times 3.14$$

Hereinafter, the granules constituting the animal litter 3 of the present embodiment will be described in detail.

(Components of granule)

In the present embodiment, each granule constituting the animal litter 3 comprises an inorganic porous material and a solidifying agent, and further comprises no silica gel at all or, even if the animal litter does comprise silica gel, comprises at a low content of 2.5% by mass or less. Hereinafter, these components will be described.

(Inorganic porous material)

The inorganic porous material, which is one component of each granule, is not particularly limited as long as the effect of the present invention is not impaired, and any inorganic porous material that can be used as a component of animal litter can be used. Examples of such an inorganic porous material include zeolite, sepiolite, attapulgite, diatomaceous earth, and diatomaceous shale.

The particle size of the inorganic porous material is not particularly limited, and for example, is 400 μm or less, is preferably 300 μm or less, and is more preferably 200 μm or less.

The content of the inorganic porous material in each granule is not particularly limited as long as the effect of the present invention is not impaired, and any content can be adopted according to the desired malodor suppression effect and strength. Examples of such content include a content of 50 to 98% by mass. The content of the inorganic porous material in each granule is preferably 50 to 95% by mass, and more preferably 60 to 90% by mass. Note that the content of the inorganic porous material in each granule means a mass ratio of the inorganic porous material contained per particle of granule.

(Solidifying agent)

The solidifying agent, which is one component of each granule, is not particularly limited as long as the effect of the present invention is not impaired, and any solidifying agent that can be used as a component of animal litter can be used. Examples of such a solidifying agent include cement-based solidifying agents and non-cement-based solidifying agents. The cement-based solidifying agents and non-cement-based solidifying agents may each be used independently, or may be mixed for use.

A cement-based solidifying agent is a solidifying agent consisting of cement, is mainly composed of calcium silicate, and is a solidifying agent that reacts with water (hydrates) to harden. Examples of cement include Portland cement and white cement. By using such cement as a solidifying agent, strength of each granule constituting the animal litter can be increased.

As the cement-based solidifying agent, low-alkaline cement may be used. A low-alkaline cement is a cement having low alkalinity with a pH of about 11, in which the content of alkali metals (Na, K) contained in the cement is adjusted to a predetermined content or less. By using a low-alkaline cement as a solidifying agent, the pH for the granules constituting the animal litter can be decreased. When the pH for the granules is decreased as such, ammonia, which causes malodor, is not easily generated even when each granule is brought into contact with urine, and therefore generation of malodor caused by ammonia can be suppressed.

A non-cement-based solidifying agent is a solidifying agent other than the cement-based solidifying agent, and is a solidifying agent that is not mainly composed of calcium silicate. Examples of the non-cement-based solidifying agent include dolomite, calcium oxide, calcium sulfate, and magnesium oxide. Particularly, when a mixture of a cement-based solidifying agent and a non-cement-based solidifying agent is used as the solidifying agent, the strength of each granule can be increased while the pH for the granules can be decreased, and generation of malodor caused by ammonia can be more reliably suppressed.

As the non-cement-based solidifying agent, a hydraulic solidifying agent mainly composed of calcium sulfate and magnesium oxide may be used. Such hydraulic solidifying agents exhibit almost neutral properties. Further, magnesium hydroxide generated during hardening of the solidifying agent exhibits weak basicity. Therefore, when using such a hydraulic solidifying agent as a non-cement-based solidifying agent, the pH for the granules can be decreased, and generation of malodor caused by ammonia can be more reliably suppressed.

In the hydraulic solidifying agent mainly composed of calcium sulfate and magnesium oxide, the content of calcium sulfate is preferably 50 to 95% by mass, and the content of magnesium oxide is preferably 5 to 50% by mass. The content of calcium sulfate is the content when converted to an anhydride.

The content of the solidifying agent in each granule is not particularly limited as long as the effect of the present invention is not impaired, and any content can be adopted according to the desired malodor suppression effect and strength. Examples of such content include a content of 5 to 30% by mass. The content of the solidifying agent in each granule, from the viewpoints of malodor suppression effect and strength, is preferably 10 to 25% by mass.

(Silica gel)

As stated above, in the present embodiment, each granule constituting the animal litter 3 comprises no silica gel at all or, even if each granule does comprise silica gel, comprises at a low content of 2.5% by mass or less. Specifically, the silica gel is an optional component of each granule constituting the animal litter 3.

In the present embodiment, the silica gel that can be used as a component of each granule is not particularly limited in type or structure as long as the content is 0.0% by mass or greater and 2.5% by mass or less, and any silica gel that can be used as a component of animal litter can be used. Examples of such silica gel include commercially available silica gels such as type A silica gel, type B silica gel, and type C silica gel.

The content of silica gel in each granule, as stated above, is 0.0% by mass or greater and 2.5% by mass or less. When the content of silica gel in each granule is within such a range, there is no odorous substance adsorbed onto silica gel or the amount of odorous substance adsorbed onto the silica gel is small, and therefore the release amount of odorous substance adsorbed onto the silica gel can consequently be reduced. As a result, the animal litter 3 of the present embodiment can also suppress generation of malodor caused by the release of an odorous substance adsorbed onto silica gel.

(Additional components)

In the present embodiment, each granule constituting the animal litter 3 may further comprise any additive component in addition to the inorganic porous material, the solidifying agent, and silica gel. Such an additive component is not particularly limited, and for example, includes various functional components such as fragrance components and antibacterial components, test reagent components, hydrophilizing components, hydrophobizing components, other deodorizing components, preservative components, germicidal components, antifungal components, and coloring components. These functional components may be used independently or in combination of two or more.

The fragrance component is not particularly limited as long as a compound having an aromatic property is contained, and for example, includes alcohols such as geraniol, citronellol, citral, eugenol, phenethyl alcohol, thymol, linalool, leaf alcohol, menthol, and benzyl alcohol; aldehydes such as hexylcinnamaldehyde; and oils. The fragrance component may further comprise a dispersant for dispersing the compound having an aromatic property in water. Examples of the dispersant include glycols, which are liquids at room temperature (25°C), and polymers thereof.

The antibacterial component is not particularly limited as long as proliferation of bacteria can be suppressed, and for example, any antibacterial agent such as an organic, inorganic metal-based, photocatalyst-based, or natural agent can be used. Thereamong, from the viewpoint that the proliferation of bacteria can be suppressed even after each granule has absorbed excrement such as urine, it is preferable that an organic surfactant-type antibacterial agent be used.

The test reagent component is not particularly limited as long as the health condition of an animal can be detected, and for example, a reagent that changes color according to a component in urine, such as a pH test reagent, a protein test reagent, a glucose test reagent, an occult blood test reagent, or a urobilinogen test reagent can be used.

The hydrophilizing component is not particularly limited as long as each granule can be hydrophilized, and for example, surfactants can be used. Further, the hydrophobizing component is not particularly limited as long as each granule can be hydrophobized, and for example, an aliphatic hydrocarbon, a silicone resin, a fatty acid or a metal salt thereof, a polyglycol, a fatty acid ester, a wax, a low-molecular-weight polyolefin, or a fluororesin can be used.

The other deodorizing components are not particularly limited as long as the components are not the above inorganic porous material and silica gel and have a deodorizing effect, and for example, include those that neutralize ammonia odor, such as citric acid and baking soda.

Each granule constituting the animal litter 3 may comprise activated carbon in place of the above silica gel. Specifically, each granule may comprise activated carbon in addition to the inorganic porous material and the solidifying agent. When each granule comprises such activated carbon, an odorous substance can be adsorbed by the activated carbon, and the activated carbon can be gradually oxidized to reduce the pH for the granules, and therefore does not easily allow ammonia, which causes malodor, to be generated.

(Surface coating)

In the present embodiment, each granule constituting the animal litter 3 may have the surface thereof coated with any surface treatment agent, such as a water-repelling agent or an ethylene-vinyl acetate copolymer.

Each granule constituting the animal litter 3 of the present embodiment preferably has the surface thereof coated with a water-repelling agent. When the surface of each granule is coated with a water-repelling agent, urine easily passes between granules without being absorbed by each granule, urine is less likely to come into contact with the inside of each granule, and ammonia produced by decomposition of urea in urine is not easily generated. Therefore, the animal litter 3 composed of such granules can more reliably suppress generation of malodor caused by an odorous substance adsorbed onto each granule, malodor caused by urine remaining on the surface of each granule, and malodor caused by ammonia, and can demonstrate an even more excellent malodor suppression effect.

The water-repelling agent that can be used in the animal litter 3 of the present embodiment is not particularly limited, and any water-repelling agent that can be used in animal liter can be used. Examples of such a water-repelling agent include waxes such as paraffin wax, silicone resins, and fluororesins.

Each granule constituting the animal litter 3 of the present embodiment may have the surface thereof coated with an ethylene-vinyl acetate copolymer (EVA). When the surface of each granule is coated with EVA, urine is less likely to come into contact with the inside of each granule, and ammonia produced by decomposition of urea in urine is not easily generated. Therefore, the animal litter 3 composed of such granules can more reliably suppress generation of malodor caused by ammonia and malodor caused by urine remaining on the surface of each granule, and can demonstrate an even more excellent malodor suppression effect.

Each granule constituting the animal litter 3 of the present embodiment may have the surface thereof coated with a mixture of the above water-repelling agent and an ethylene-vinyl acetate copolymer (EVA). When the surface of each granule is coated with a mixture of a water-repelling agent and EVA, urine easily passes between granules without being absorbed by the plurality of granules, urine is less likely to come into contact with the inside of each granule, and ammonia produced by decomposition of urea contained in urine is not easily generated. Therefore, the animal litter 3 composed of such granules can better suppress generation of malodor caused by an odorous substance adsorbed onto each granule, malodor caused by urine remaining on the surface of each granule, and malodor caused by ammonia.

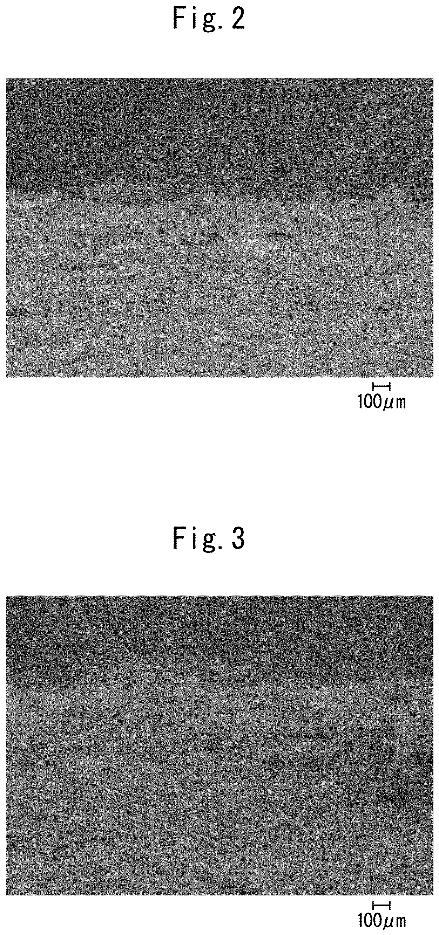

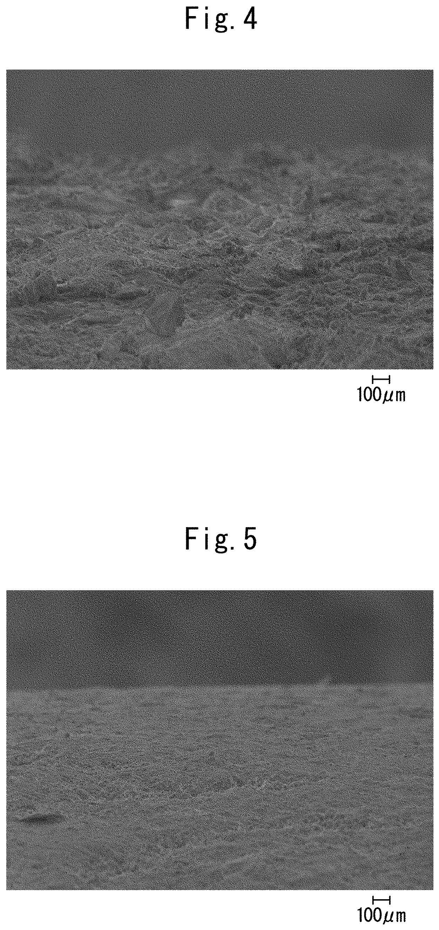

FIGS. 2 to 4 are SEM (scanning electron microscope) images of the surfaces of granules constituting the animal litter 3 of the present embodiment that has been surface-treated with a water-repelling agent, an ethylene-vinyl acetate copolymer, and a mixture of a water-repelling agent and an ethylene-vinyl acetate copolymer, respectively. FIG. 5 is an SEM image of the surface of a granule constituting the animal litter 3 of the present embodiment that has not been surface-treated. When compared to the surface of the granule shown in FIG. 5, the surfaces of the granules shown in FIGS. 2 to 4 are coarse. Particularly, the granule surface-treated with a mixture of a water-repelling agent and an ethylene-vinyl acetate copolymer in FIG. 4 is observed to have a notable uneven structure, and the presence or absence of a surface treatment is understood to affect the uneven state of the surface of a granule.

The surface treatment agent used in coating the surface of each granule may further comprise any inorganic powder or additive component, in addition to the water-repelling agent and EVA. Examples of such an inorganic powder include talc, mica, kaolin, calcium carbonate, and aluminum oxide. The additive component is not particularly limited, and for example, includes the same functional components as the above additive components in each granule, specifically, various functional components such as fragrance components and antibacterial components, test reagent components, hydrophilizing components, hydrophobizing components, deodorizing components, preservative components, germicidal components, antifungal components, and coloring components. These functional components may be used independently or in combination of two or more.

The means of coating the surface of each granule with the above surface treatment agent is not particularly limited, and any application means can be adopted. Examples of such application means include a means of applying a surface treatment agent onto the surface of each granule by spraying; and a means of immersing each granule in a surface treatment solution.

When the surface of each granule is coated with the surface treatment agent, the coating amount is not particularly limited as long as the effect of the present invention is not impaired, and any coating amount can be adopted according to the desired malodor suppression effect and strength. Such a coating amount, for example, is 0.01 to 5.00% by mass, preferably 0.05 to 3.00% by mass, and more preferably 0.10 to 1.00% by mass relative to the mass of each granule.

The individual coating form of the plurality of granules is not particularly limited as long as the effect of the present invention is not impaired. The entire surface of an individual granule may be coated with a surface treatment agent, or only a portion of the surface of an individual granule may be coated with the surface treatment agent. In a plurality of granules, the surfaces of all of the granules may be coated with a surface treatment agent, or only the surfaces of some of the granules may be coated with the surface treatment agent.

The plurality of granules constituting the animal litter 3 of the present embodiment each have a substantially cylindrical outer shape, but the shape of each granule is not limited to such a shape. For the shape of each granule, for example, any outer shape such as a substantially spherical shape or an irregular granular shape can be adopted. However, from the viewpoint of reducing scattering of the granules during use of the animal litter, it is preferable that the shape of each granule be substantially cylindrical.

The size of each granule is not particularly limited as long as the effect of the present invention is not impaired, and any size can be adopted according to the desired malodor suppression effect and strength. Examples of the size of such a granule include a particle size within the range of 3.0 to 8.0 mm.

The particle size of each granule is preferably within the range of 3.5 to 6.0 mm. When the particle size of each granule is within such a range, gaps are easily formed between granules, and urine easily passes between granules in the plurality of granules. Therefore, the animal litter composed of granules each having such a particle size can more reliably suppress generation of malodor caused by an odorous substance adsorbed onto each granule and malodor caused by urine remaining on the surface of each granule. In addition, there is an advantage that the granules each having a particle size in the above specific range prevents such granules from being easily trapped in the paw pads of animals such as cats, and thus even if an animal that has stepped onto the animal litter walks around a room, the granules are not easily scattered about the room, and the spread of malodor associated with such granules can also be suppressed.

The particle size of each granule is a granule size determined by a sieving method, i.e., mesh openings of a sieve. Specifically, the particle size of each granule means the particle size (mm) thereof corresponding to the median mass, i.e., the particle size at 50% by mass, determined from the particle size distribution obtained by a sieving method. The particle size distribution can be obtained by sieving granules of a predetermined mass (for example, 150 g) for a predetermined amount of time (for example, 3 min) using a vibratory sieve machine (for example, "AS-200" manufactured by Retsch GmbH) comprising a plurality of sieves having different mesh openings, and calculating the mass percentage (%) based on the mass (g) of the granules remaining on each sieve.

The plurality of granules constituting the animal litter of the present invention can be obtained by granulating the components of each granule that comprise the above inorganic porous material and solidifying agent using any granulator. The granulator used in granulating the components into each granule is not particularly limited, and for example, includes compression granulators such as disc pelletizers, briquette machines, and tablet presses; and extrusion granulators. When the surface of each granule after granulation is coated with the above surface treatment agent, the surface treatment agent is applied to the surface of each granule after granulation using any application means.

<Second embodiment>

Hereinafter, another embodiment of the present invention, i.e., the second embodiment of the present invention, which differs from the above first embodiment only in pH characteristics after liquid passage, will be described. Note that since the points other than the pH characteristics after liquid passage, which constitute the difference from the above first embodiment, are basically the same as those of the above first embodiment, the description thereof will be omitted.

The animal litter of the second embodiment of the present invention is also an animal litter comprising a plurality of granules, wherein each of the plurality of granules comprises an inorganic porous material and a solidifying agent, and further comprises silica gel at a content of 0.0% by mass or greater and 2.5% by mass or less. In the present embodiment, the pH of ion-exchange water after a liquid passage test for the plurality of granules is less than 7.62.

The animal litter of the present embodiment also comprises no silica gel or, even if the animal litter does comprise silica gel, comprises at a low content of 2.5% by mass or less. Since there is no odorous substance adsorbed onto silica gel or the amount of odorous substance adsorbed onto the silica gel is small, the release amount of odorous substance adsorbed onto the silica gel can consequently be reduced. As a result, the animal litter of the present embodiment can also suppress generation of malodor caused by the release of an odorous substance adsorbed onto silica gel.

As stated above, in conventional animal litter, even when silica gel is contained, the pH for a plurality of granules sometimes cannot be controlled within an appropriate range, and there is a risk that ammonia, which causes malodor, is generated. In the animal litter of the present embodiment, the pH of ion-exchange water after a liquid passage test for a plurality of granules is less than 7.62, and therefore, even when the animal litter is brought into contact with urine, ammonia, which causes malodor, is not easily generated. As a result, the animal litter of the present embodiment can suppress generation of malodor caused by ammonia.

As described above, the animal litter of the present embodiment can suppress generation of malodor caused by an odorous substance adsorbed onto silica gel and malodor caused by ammonia, and can demonstrate an excellent malodor suppression effect.

In the present embodiment, the means of setting the pH of ion-exchange water after a liquid passage test for the granules to less than 7.62 is not particularly limited, and for example, includes adjusting the composition of components constituting each granule; and/or coating the surface of each granule with the above surface treatment agent and adjusting the amount and the coating form thereof.

(Measurement method for pH of ion-exchange water after liquid passage test)

The pH of ion-exchange water after a liquid passage test for the granules can be measured as follows.

(1) First, the inside of a cylinder having an inner diameter of 84 mm and a depth of 30 mm is filled with a sample of granules to be measured.
(2) Next, from a height of 2 cm above the sample of granules within the cylinder, about 20 g of ion-exchange water, with the mass (g) measured in advance, is dropped.
(3) Ion-exchange water that passes through the cylinder and flows out from below the cylinder is collected, and the mass (g) thereof is measured.
(4) The mass of the ion-exchange water after passing through the cylinder is divided by the mass of the ion-exchange water before dropping and then multiplied by 100 to calculate the liquid permeability (%) of the granules.
(5) The pH of ion-exchange water after passing through the cylinder is measured using any pH meter (for example, a "LAQUAtwin pH-22" compact pH meter manufactured by HORIBA, Ltd.). The measured value of pH obtained in such a manner is the pH of ion-exchange water after a liquid passage test for the granules.

The animal litter of the present invention may be an animal litter in a combined form of the above first embodiment and second embodiment. Specifically, the animal litter in this combined form is an animal litter comprising a plurality of granules, wherein each of the plurality of granules comprises an inorganic porous material and a solidifying agent, and further comprises silica gel at a content of 0% by mass or greater and 2.5% by mass or less. In the present embodiment, the area of a water drop mark after a colored water drop test for each of the plurality of granules is less than 12.6 mm$^2$. Further, the pH of ion-exchange water after a liquid passage test for the plurality of granules is less than 7.62.

The animal litter of the present embodiment can bring about the effects of both of the above first embodiment and second embodiment. Specifically, the animal litter of the present embodiment can suppress generation of malodor caused by an odorous substance adsorbed onto silica gel and each granule, malodor caused by urine remaining on the surface of each granule, and malodor caused by ammonia.

<Third embodiment>

Hereinafter, another embodiment of the present invention, i.e., the third embodiment of the present invention, which differs from the above first embodiment only in that each granule has water repellency and has an uneven structure, will be described. Note that since the points other than water repellency and uneven structure, which constitute differences from the above first embodiment, are basically the same as the above first embodiment, the descriptions thereof are omitted.

The animal litter of the third embodiment of the present invention is also an animal litter comprising a plurality of granules, wherein each of the plurality of the granules comprises an inorganic porous material and a solidifying agent, and further comprises silica gel at a content of 0.0% by mass or greater and 2.5% by mass or less. In the present embodiment, each of the plurality of granules has water repellency and has an uneven structure comprising a plurality of convex portions. In the present specification, each granule having an uneven structure refers to the case where each granule has an Ra (Arithmetic Mean Roughness) of 0.20 $\mu$m or more and an Rsm (Mean Width of Profile Elements) of 20 $\mu$m or more, measured in accordance with the present specification.

The animal litter of the present embodiment also comprises no silica gel or, even if the animal litter does comprise silica gel, comprises at a low content of 2.5% by mass or less. Since there is no odorous substance adsorbed onto silica gel or the amount of odorous substance adsorbed onto the silica gel is small, the release amount of odorous substance adsorbed onto the silica gel can consequently be reduced. As a result, the animal litter of the present embodiment can also suppress generation of malodor caused by the release of an odorous substance adsorbed onto silica gel.

In the animal litter of the present embodiment, each of the granules has water repellency. In the present specification, each granule having water repellency means that the water contact angle of the surface of each granule is 90° or higher. The means of imparting each of the granules with water repellency is not particularly limited, and any known means of adjusting water repellency in the pertinent field can be adopted. Specific examples include adjusting the composition of components constituting each granule; and/or coating the surface of each granule with a surface treatment agent such as a water-repelling agent and adjusting the amount and the coating form thereof.

The water contact angle of the surface of each granule can be measured as follows.

(1) In a thermostatic-hygrostatic chamber at a temperature: $20\pm5$°C and a humidity: $65\pm5$% RH, an aluminum ring (outer diameter: 430 mm, inner diameter: 400 mm, height: 50 mm) and a granule dried at 120°C for 60 min are prepared and left to stand for 24 h.

(2) One granule is evenly packed inside the aluminum ring, and the granule with the aluminum ring is compressed for 1 min at a pressure of 3 MPa using a press with a smooth bottom to smoothen the surface of the granule.

(3) The water contact angle of the compressed granule is measured in accordance with JIS R 3257:1999 "Testing method of wettability of glass substrate", 6. Sessile drop method. Contact angle measuring devices include an automatic contact angle meter, model CA-V, manufactured by Kyowa Interface Science Co., Ltd. The water contact angle refers to a value 200 ms after deionized water is dropped.

(4) The water contact angle is measured in 20 different samples, and the average value thereof is adopted.

As a means of imparting each of the granules with water repellency, when adjusting the composition of components constituting each granule, it is preferable that each granule comprises a water-repellent particle at least on the surface thereof. The water-repellent particle may be mixed into the raw material of each granule, or may be dispersed on the surface of each granule during the formation step thereof.

The water-repellent particles are not particularly limited, and for example, include those of tetrafluoroethylene resins (hereinafter, referred to as "PTFE"), pitch fluoride, graphite fluoride, silicone powder, methyl silicone powder, and PTFE solvent dispersions. As the water-repellent particles, those of a particulate fluororesin is preferable, and as the particulate fluororesin, PTFE is particularly preferable. In addition, the water-repellent resin needs only to have water repellency, and may be particles of any of the preferable thermoplastic resins listed below.

When adopting PTFE for the water-repellent particles, the adjustment method thereof is not particularly limited. Since PTFE has a high water-repellent effect and mixes satisfactorily with a solidifying agent, a low-molecular-weight PTFE, specifically having an average molecular weight from 500 to 5000, is preferable.

The average primary particle size of the water-repellent particles is preferably 0.05 $\mu$m to 60 $\mu$m, and more preferably 0.05 $\mu$m to 30 $\mu$m.

In the animal litter of the present embodiment, when each granule comprises a water-repellent particle at least on the surface thereof, urine easily passes between granules without being absorbed by each granule, and therefore urine is less likely to come into contact with the inside of each granule, and ammonia produced by decomposition of urea in urine is not easily generated.

According to the above, in the animal litter of the present embodiment, when each granule comprises a water-repellent particle, generation of malodor caused by an odorous substance adsorbed onto each granule, malodor caused by urine remaining on the surface of each granule, and malodor caused by ammonia can be more reliably suppressed, and an even more excellent malodor suppression effect can be demonstrated.

When surface-treating each granule as a means of imparting each of the granules with water repellency, it is preferable that the surface of each of the granules be coated with a surface treatment agent such as a water-repelling agent. As a means of adjusting the amount and the coating form, any of those mentioned in the above description of "(Surface coating)" can be adopted as long as the water contact angle of the surface of each granule can be 90° or more.

In the animal litter of the present embodiment, each of the granules has an uneven structure comprising a plurality of convex portions. The method of forming the uneven structure on each granule is not particularly limited. For example, a mold having an uneven structure on the inside can be filled with the raw material of each granule and then heated to solidify; or after the raw material of each granule is heated to solidify, a physical impact can be applied to each granule to dislodge a portion of particles constituting the animal litter to form a plurality of concave portions and generate a plurality of convex portions in portions other than the plurality of concave portions on each granule.

As stated above, in conventional animal litter, after a plurality of granules adsorb an odorous substance generated from excrement such as urine, there is a risk that an unpleasant odor is generated by the adsorbed odorous substance being gradually released. Further, in conventional animal litter, there is also a risk that an unpleasant odor of ammonia is generated, produced by evaporation of urine remaining on the surface of each granule. In the animal litter of the present embodiment, since each of the plurality of granules has water repellency and an uneven structure, urine passes between granules without being absorbed by each granule even more easily, compared to those having water repellency and no uneven structure. As a result, in the animal litter of the present embodiment, urine does not easily remain on the surface of each granule, and ammonia produced by decomposition of urea contained in urine is not allowed to be easily generated.

As described above, the animal litter of the present embodiment can suppress generation of malodor caused by an odorous substance adsorbed onto silica gel and each granule, malodor caused by urine remaining on the surface of each granule, and malodor caused by ammonia, and can demonstrate an excellent malodor suppression effect.

As described in the above first embodiment, the uneven structure can also be formed on the surface of each granule by a surface treatment of each granule. Particularly, the notable uneven structure is observed on each granule surface-treated with a mixture of a water-repelling agent and an ethylene-vinyl acetate copolymer because it is considered that due to the ethylene-vinyl acetate copolymer being a thermoplastic resin, when the raw material of each granule is molded and then heated while stirring to solidify, a particle dislodged by collision of a granule with another granule is likely to adhere again to the surface of a granule.

From the viewpoint of facilitating formation of the uneven structure on the surface of each granule, each granule constituting the animal litter may further comprise a thermoplastic resin in addition to the inorganic porous material, the solidifying agent, and silica gel. The thermoplastic resin is not particularly limited, and for example, includes low-density polyethylene, medium-density polyethylene, high-density polyethylene, ethylene-$\alpha$-olefin copolymers; homo-, block, and random polypropylene; propylene-$\alpha$-olefin copolymers, and ethylene-vinyl acetate copolymers. For example, an ethylene-$\alpha$-olefin copolymer can refer to a block copolymer or a random copolymer of propylene and $\alpha$-olefin. The $\alpha$-olefin component can be exemplified by ethylene, 1-butene, 1-pentene, 1-hexene, 1-heptene, 1-octene, and 4-methyl-1-pentene. The melting point of the thermoplastic resin, from the viewpoints of ease of molding, ease of exhibiting water repellency, and malodor suppression effect of the animal litter of the present embodiment, for example, is 50 to 135°C, and is preferably 60 to 120°C.

Ra (Arithmetic Mean Roughness) of each granule constituting the animal litter of the present embodiment, from the viewpoint of allowing urine to easily pass between granules without being absorbed by each granule, is 0.20 $\mu$m or more and preferably 1.0 $\mu$m or less, and more preferably 0.26 $\mu$m or more and 0.95 $\mu$m or less.

In the animal litter of the present embodiment, since each granule has an Ra (Arithmetic Mean Roughness) of a predetermined range, urine easily passes between granules without being absorbed by each granule, and therefore urine is less likely to come into contact with the inside of each granule, and ammonia produced by decomposition of urea in urine is not easily generated.

According to the above, the animal litter of the present embodiment can more reliably suppress generation of malodor caused by an odorous substance adsorbed onto each granule, malodor caused by urine remaining on the surface of each granule, and malodor caused by ammonia, and can demonstrate an even more excellent malodor suppression effect.

Rsm (Mean Width of Profile Elements) of each granule constituting the animal litter of the present embodiment, from the viewpoint of allowing urine to easily pass between granules without being absorbed by each granule, is 20 $\mu$m or more and preferably 30 $\mu$m or less, and more preferably 20 $\mu$m or more and 25 $\mu$m or less.

In the animal litter of the present embodiment, since each granule has an Rsm (Mean Width of Profile Elements) of a predetermined range, urine easily passes between granules without being absorbed by each granule, and therefore urine is less likely to come into contact with the inside of each granule, and ammonia produced by decomposition of urea in urine is not easily generated.

According to the above, the animal litter of the present embodiment can more reliably suppress generation of malodor caused by an odorous substance adsorbed onto each granule, malodor caused by urine remaining on the surface of each granule, and malodor caused by ammonia, and can demonstrate an even more excellent malodor suppression effect.

Note that in the present specification, when measuring the Ra (Arithmetic Mean Roughness) and Rsm (Mean Width of Profile Elements) of each granule, a laser displacement (model: KS-1000) manufactured by Keyence Corporation was used, surface roughness in the longitudinal direction of the granule was measured at 10 different sites under the following measurement conditions, and the average value thereof was adopted.

Measurement range: X-axis 500 $\mu$m, Y-axis 5000 $\mu$m
Measurement pitch: X-axis 10 $\mu$m, Y-axis 10 $\mu$m
Movement speed: 500 $\mu$m/s

In the animal litter of the present embodiment, the uneven structure of each granule preferably comprises particles constituting the animal litter. The particles constituting the animal litter, as stated above, mean the inorganic porous material, solidifying agent, silica gel, and any additive components.

In the animal litter of the present embodiment, since the uneven structure of each granule comprises granule-constituting particles that are resistant to plastic deformation, there is little deformation of the uneven structure even during use of the animal litter, urine easily passes between granules without being absorbed by each granule, and therefore urine is less likely to come into contact with the inside of each granule, and the effect of ammonia produced by decomposition of urea in urine not being easily generated can be maintained.

According to the above, the animal litter of the present embodiment can more reliably suppress generation of malodor caused by an odorous substance being adsorbed onto each granule, malodor caused by urine remaining on the surface of each granule, and malodor caused by ammonia, and can demonstrate an even more excellent malodor suppression effect.

The animal litter of the present invention may be an animal litter in a combined form of the above third embodiment and the above first embodiment or second embodiment. Specifically, the animal litter in this combined form is an animal litter comprising a plurality of granules, wherein each of the plurality of granules comprises an inorganic porous material and a solidifying agent, further comprises silica gel at a content of 0% by mass or greater and 2.5% by mass or less, has water repellency, and has an uneven structure comprising a plurality of convex portions. In the present embodiment, the area of a water drop mark after a colored water drop test for each of the plurality of granules is less than 12.6 mm$^2$, or the pH of ion-exchange water after a liquid passage test for the plurality of granules is less than 7.62.

The animal litter of the present embodiment can bring about the effects of both of the above third embodiment and the first embodiment or second embodiment. Specifically, the animal litter of the present embodiment can suppress generation of malodor caused by an odorous substance adsorbed onto silica gel and each granule, malodor caused by urine remaining on the surface of each granule, and malodor caused by ammonia.

The animal litter of the present invention is not limited to the above embodiments and the Examples described below, and appropriate combinations, substitutions, and modifications can be made within the scope of the present invention that does not depart from the object or spirit thereof. Note that in the present specification, ordinal numbers such as "first" and "second" are for distinguishing items that are assigned such ordinal numbers, and do not mean the order, priority, or importance of each item.

EXAMPLES

Hereinafter, the present invention will be more specifically described by way of the Examples and Comparative Examples. However, the present invention should not be interpreted as being limited to such Examples only.

(Production of animal litter)

80% by mass of zeolite powder (produced in Ayashi, Miyagi Prefecture, 60-mesh pass product, average particle size of 150 $\mu$m, moisture content of 7% or less) and 20% by mass of white cement (manufactured by Taiheiyo Cement Corporation) were mixed by stirring with a Lödige mixer. The resulting mixture was compressed and granulated in a disc pelletizer (manufactured by Dalton Corporation). For the disc outlet opening dimensions, the diameter was 5.5 mm, the disc thickness was 35 mm, and the effective length was 12 mm.

The plurality of granulated materials obtained in such a manner were left to stand at room temperature of 20°C for 72 h to allow the solidification reaction of the cement to proceed. The plurality of granules were then dried using a rotary kiln dryer until the final moisture content was 10% or less.

A surface treatment agent consisting of a mixture of 50% by mass of a wax-based resin (TH-44 manufactured by Nicca Chemical Co., Ltd.) as a water-repelling agent and 50% by mass of an ethylene-vinyl acetate copolymer (EVA) was applied to the dried plurality of granules in an amount of 1.00% by mass relative to the mass of the granules. During application, the surface treatment agent was sprayed by a sprayer while mixing the dried plurality of granules by stirring.

The plurality of granules having the surfaces thereof coated with the above surface treatment agent were sieved using a sieve having 10 mm × 10 mm mesh openings to remove granules larger than a predetermined size, and were then sieved again with a sieve having 5 mm × 10 mm mesh openings to remove granules and powder smaller than a predetermined size to obtain a plurality of granules having a size within a predetermined range.

As such, the animal litter of Example 1 was obtained.

Except that the composition and the surface coating (type of surface treatment agent) of each granule were changed to those indicated in Table 1 below, the animal litter of Examples 2 to 6 and Comparative Examples 1 to 10 were obtained in the same manner as in Example 1. For the silica gel, a commercially available type C silica gel (produced in Qingdao, China) was used.

Regarding the resulting animal litter of Examples 1 to 6 and Comparative Examples 1 to 10, the area of the water drop mark after the above colored water drop test, liquid passage rate, and pH of ion-exchange water after a liquid passage test were each measured. In addition, regarding the animal litter of the Examples and Comparative Examples, the surface roughness (Ra (Arithmetic Mean Roughness) and Rsm (Mean Width of Profile Elements) were each measured, and the presence or absence of water repellency and the presence or absence of uneven structures were confirmed. Further, according to the following <Sensory evaluation method of urine odor>, a sensory evaluation regarding the malodor suppression effect on urine for the animal litter of each of the Examples and Comparative Examples was carried out. These measurement results and sensory evaluation results are shown in Table 1 below. Regarding each of the presence or absence of water repellency and the presence or absence of uneven structures, presence is indicated as "Yes", and absence is indicated as "No".

<Sensory evaluation method of urine odor>

(1) The inside of a cylinder having an inner diameter of 84 mm and a depth of 30 mm, placed on a grating, was filled with a sample of the animal litter to be evaluated.
(2) 20 mL of real urine (actual cat urine) was dropped three times from above the sample of the animal litter filled in the cylinder. The total amount dropped was 60 mL.
(3) The sample after dropping real urine was placed in a sealable container having a capacity of 700 mL.
(4) Odor of the sample in the container was smelled and evaluated based on the following evaluation criteria for urine odor intensity and pleasantness/unpleasantness level. During the evaluation, the average score of 20 evaluations was adopted.

(Evaluation criteria for urine odor intensity)

1: Barely detectable or no odor
2: Odor at a level that allows the odor to be identified
3: Easily detectable odor
4: Strong odor
5: Very strong odor

(Evaluation criteria for pleasantness/unpleasantness level)

1: Very pleasant
2: Pleasant
3: Neither pleasant nor unpleasant
4: Unpleasant
5: Very unpleasant

[Table 1]

| | | Example 1 | Example 2 | Comparative Example 1 | Comparative Example 2 | Example 3 | Example 4 | Comparative Example 3 | Example 5 | Example 6 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|---|---|---|---|---|
| Composition of granule | Inorganic porous material (% by mass) | 80.0 | 80.0 | 80.0 | 80.0 | 79.5 | 79.5 | 79.5 | 77.5 | 77.5 | 77.5 | 77.5 | 76.5 | 76.5 | 76.5 | 76.5 | 75.0 |
| | Solidifying agent (% by mass) | 20.0 | 20.0 | 20.0 | 20.0 | 20.0 | 20.0 | 20.0 | 20.0 | 20.0 | 20.0 | 20.0 | 20.0 | 20.0 | 20.0 | 20.0 | 20.0 |
| | Silica blending amount (% by mass) | 0.0 | 0.0 | 0.0 | 0.0 | 0.5 | 0.5 | 0.5 | 2.5 | 2.5 | 2.5 | 2.5 | 3.5 | 3.5 | 3.5 | 3.5 | 5.0 |
| | Surface coating (type of surface treatment agent) | Water-repelling agent + EVA | Water-repelling agent | EVA | None | Water-repelling agent + EVA | Water-repelling agent | None | Water-repelling agent + EVA | Water-repelling agent | EVA | None | Water-repelling agent + EVA | Water-repelling agent | EVA | None | Water-repelling agent + EVA |
| Area of water drop mark after colored water drop test (mm$^2$) | | 2.4 | 4.9 | 12.6 | 33.0 | 2.4 | 3.9 | 35.3 | 2.4 | 4.9 | 12.6 | 35.3 | 2.4 | 4.9 | 12.8 | 35.2 | 3.1 |
| Liquid passage rate (%) | | 96.0 | 95.6 | 93.8 | 86.7 | 95.7 | 95.1 | 88.1 | 95.3 | 94.9 | 94.0 | 87.9 | 95.2 | 94.7 | 93.5 | 85.8 | 95.4 |
| pH of ion-exchange water after liquid passage test | | 7.39 | 7.62 | 8.57 | 10.08 | 7.05 | 7.56 | 9.91 | 7.00 | 7.59 | 7.71 | 9.71 | 6.95 | 7.39 | 7.70 | 9.66 | 6.77 |
| Surface roughness | Ra (Arithmetic Mean Roughness) (μm) | 0.93 | 0.33 | 0.25 | 0.18 | 0.93 | 0.33 | 0.18 | 0.93 | 0.33 | 0.25 | 0.18 | 0.93 | 0.33 | 0.25 | 0.18 | 0.93 |
| | Rsm (Mean Width of Profile Elements) (μm) | 20.69 | 21.37 | 24.9 | 31.07 | 20.69 | 21.37 | 31.07 | 20.69 | 21.37 | 24.9 | 31.07 | 20.69 | 21.37 | 24.9 | 31.07 | 20.69 |
| Water repellency | | Yes | Yes | No | No | Yes | Yes | No | Yes | Yes | No | No | Yes | Yes | No | No | Yes |

| | | | | | | | | | | | | | | | | | |
|---|---|---|---|---|---|---|---|---|---|---|---|---|---|---|---|---|---|
| Uneven structure | | Yes | Yes | Yes | No | Yes | Yes | No | Yes | Yes | Yes | No | Yes | Yes | Yes | No | Yes |
| Sensory evaluation | Urine odor intensity | 2.40 | 2.60 | 2.80 | 3.00 | 2.40 | 2.50 | 3.00 | 2.30 | 2.50 | 2.80 | 3.10 | 3.20 | 3.30 | 3.40 | 3.60 | 3.20 |
| | Pleasantness/ unpleasantness level | 2.75 | 3.00 | 3.10 | 3.50 | 2.75 | 2.90 | 3.50 | 2.95 | 2.95 | 3.20 | 3.50 | 3.60 | 3.70 | 3.80 | 3.90 | 3.80 |

As shown in Table 1, the animal litter of Examples 1 to 6 of the present invention were all found to have low evaluation scores for urine odor intensity and pleasantness/unpleasantness level and to be capable of sufficiently suppressing generation of malodor. However, the Comparative Examples 1 to 10 were all found to have high evaluation scores for at least one of urine odor intensity and pleasantness/unpleasantness level and to be incapable of sufficiently suppressing generation of malodor.

REFERENCE SIGNS LIST

1   system litter box
2   cover
3   animal litter
4   litter storage container
5   excrement disposal sheet
6   excrement disposal sheet storage container

**Claims**

1. An animal litter comprising a plurality of granules, wherein each of the plurality of granules comprises an inorganic porous material and a solidifying agent, and further comprises silica gel at a content of 0.0% by mass or greater and 2.5% by mass or less, and
   wherein an area of a water drop mark after a colored water drop test is less than 12.6 mm$^2$.

2. An animal litter comprising a plurality of granules, wherein each of the plurality of granules comprises an inorganic porous material and a solidifying agent, and further comprises silica gel at a content of 0.0% by mass or greater and 2.5% by mass or less, and
   wherein a pH of ion-exchange water after a liquid passage test for the plurality of granules is 7.62 or less.

3. An animal litter comprising a plurality of granules, wherein each of the plurality of granules comprises an inorganic porous material and a solidifying agent, and has water repellency, and
wherein each of the plurality of granules further comprises silica gel at a content of 0.0% by mass or greater and 2.5% by mass or less, and has an uneven structure comprising a plurality of convex portions.

4. The animal litter according to any one of claims 1 to 3, wherein each of the plurality of granules has a surface coated with a water-repelling agent.

5. The animal litter according to any one of claims 1 to 3, wherein each of the plurality of granules has a surface coated with an ethylene-vinyl acetate copolymer.

6. The animal litter according to any one of claims 1 to 3, wherein each of the plurality of granules has a surface coated with a mixture of a water-repelling agent and an ethylene-vinyl acetate copolymer.

7. The animal litter according to any one of claims 1 to 6, wherein each of the plurality of granules comprises a water-repellent particle at least on a surface of each of the plurality of granules.

8. The animal litter according to any one of claims 1 to 7, wherein each of the plurality of granules has an Ra (Arithmetic Mean Roughness) of 0.26 $\mu$m or more and 0.95 $\mu$m or less.

9. The animal litter according to any one of claims 1 to 8, wherein each of the plurality of granules has an Rsm (Mean Width of Profile Elements) of 20 $\mu$m or more and 25 $\mu$m or less.

10. The animal litter according to claim 3, wherein the uneven structure comprises a particle that constitutes the animal litter.

# Fig. 1

# Fig. 2

100μm

# Fig. 3

100μm

# Fig. 4

100μm

# Fig. 5

100μm

## INTERNATIONAL SEARCH REPORT

| International application No. |
| --- |
| **PCT/JP2024/009189** |

| A. | CLASSIFICATION OF SUBJECT MATTER |
| --- | --- |

*A01K 1/015*(2006.01)i
FI: A01K1/015 B

According to International Patent Classification (IPC) or to both national classification and IPC

| B. | FIELDS SEARCHED |
| --- | --- |

Minimum documentation searched (classification system followed by classification symbols)

A01K1/015

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2008/096457 A1 (UNICHARM PETCARE CORP.) 14 August 2008 (2008-08-14) | 1-4, 8-10 |
| | paragraphs [0021]-[0061] | |
| Y | paragraphs [0021]-[0061] | 7 |
| A | entire text, all drawings | 6 |
| X | WO 2015/076366 A1 (UNI-CHARM CO., LTD.) 28 May 2015 (2015-05-28) | 2, 5, 9 |
| | paragraphs [0027]-[0067] | |
| A | entire text, all drawings | 6 |
| Y | JP 2022-117961 A (BANDO CHEMICAL INDUSTRIES, LTD.) 12 August 2022 (2022-08-12) | 7 |
| | abstract | |
| A | entire text, all drawings | 6 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 May 2024** | **21 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

<p style="text-align:center"><b>INTERNATIONAL SEARCH REPORT</b><br/><b>Information on patent family members</b></p>

International application No.

**PCT/JP2024/009189**

| Patent document cited in search report | | | Publication date (day/month/year) | Patent family member(s) | | | Publication date (day/month/year) |
|---|---|---|---|---|---|---|---|
| WO | 2008/096457 | A1 | 14 August 2008 | EP | 2110017 | A1 | |
| | | | | paragraphs [0023]-[0096] | | | |
| | | | | JP | 2008-193938 | A | |
| | | | | US | 2009/0211532 | A1 | |
| | | | | CN | 101600343 | A | |
| | | | | KR | 10-2009-0117714 | A | |
| | | | | AU | 2007346196 | A1 | |
| WO | 2015/076366 | A1 | 28 May 2015 | EP | 3075240 | A1 | |
| | | | | paragraphs [0030]-[0091] | | | |
| | | | | JP | 2015-100310 | A | |
| | | | | US | 2016/0262341 | A1 | |
| | | | | CN | 105764331 | A | |
| | | | | TW | 201538076 | A | |
| JP | 2022-117961 | A | 12 August 2022 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009125000 A